# EUROPEAN PATENT APPLICATION

(11) **EP 4 517 792 A2**
(43) Date of publication of application: **05.03.2025**
(21) Application number: 24184325.9
(22) Date of filing: 25.06.2024
(51) Int. Cl.: H01G 4/012, H01G 4/12, H01G 4/224, H01G 4/232, H01G 4/30

(54) **MULTILAYER CERAMIC CAPACITOR COMPRISING EXTERNAL INSULATING LAYER BASER ON ALUMINA AND BORON NITRIDE**

(30) Priority: 30.08.2023 KR 20230114470
(71) Applicant: Samsung Electro-Mechanics Co., Ltd., Suwon-si, Gyeonggi-do (KR)
(72) Inventor: Yoo, Jin Yeop, Suwon-si, Gyeonggi-do (KR); Park, Jong Pil, Suwon-si, Gyeonggi-do (KR); Lee, Chung Eun, Suwon-si, Gyeonggi-do (KR)
(74) Representative: Grünecker Patent- und Rechtsanwälte PartG mbB

(57) **Abstract**

A multilayer electronic component (100), comprising:

a body (110) including a dielectric layer (111) and an internal electrode (121, 122) alternately disposed in a first direction (T), and including first (1) and second (2) surfaces opposing each other in the first direction (T), third (3) and fourth (4) surfaces opposing each other in a second direction (L) and connected to the first (1) and second surfaces (2), and fifth (5) and sixth (6) surfaces opposing each other in a third direction (W) and connected to the first (1) to fourth (4) surfaces ;

an insulating layer (140) disposed on the first (1), second (2), fifth (5), and sixth (6) surfaces and including at least one of Al₂O₃ (alumina) and BN (boron nitride);

an external electrode (131, 132) disposed on the body (110),

wherein each of the first (1) and second (2) surfaces is concave into the body (110).

## Description

### CROSS-REFERENCE TO RELATED APPLICATION(S)

The application claims benefit of priority to Korean Patent Application No. 10-2023-0114470 filed on August 30, 2023 in the Korean Intellectual Property Office, the disclosure of which is incorporated herein by reference in its entirety.

### BACKGROUND

### 1. TECHNICAL FIELD

The present disclosure relates to a multilayer electronic component.

### 2. DESCRIPTION OF RELATED ART

A multilayer electronic component (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom.

Such a multilayer ceramic capacitor may be used as a component of various electronic devices, as a multilayer ceramic capacitor may have a small size and high capacitance and may be easily mounted. Also, recently, application thereof has been increased, including servers and automobile electronic components. Accordingly, there has been demand for development of an MLCC having higher specifications and reliability than before.

### SUMMARY

An embodiment of the present disclosure is to provide a multilayer electronic component having improved reliability.

An embodiment of the present disclosure is to provide a multilayer electronic component in which cracks are prevented.

According to an embodiment of the present disclosure, a multilayer electronic component includes a body including a dielectric layer and an internal electrode alternately disposed in a first direction, and including first and second surfaces opposing each other in the first direction, third and fourth surfaces opposing each other in a second direction and connected to the first and second surfaces, and fifth and sixth surfaces opposing each other in a third direction and connected to the first to fourth surfaces; an insulating layer disposed on the first, second, fifth and sixth surfaces and including at least one of Al₂O₃ and BN; an external electrode disposed on the body, wherein each of the first and second surfaces is concave into the body.

According to an embodiment of the present disclosure, a multilayer electronic component includes a body including a dielectric layer and an internal electrode alternately disposed in a first direction, and including first and second surfaces opposing each other in the first direction, third and fourth surfaces opposing each other in a second direction and connected to the first and second surfaces, and fifth and sixth surfaces opposing each other in a third direction and connected to the first to fourth surfaces; an insulating layer disposed on the first, second, fifth and sixth surfaces and including BN; and an external electrode disposed on the body.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is a cross-sectional diagram taken along line I-I' in FIG. 1;
FIG. 3 is a cross-sectional diagram taken along line II-II' in FIG. 1;
FIG. 4 is an enlarged diagram illustrating region K1 in FIG. 2;
FIG. 5 is a diagram illustrating a W-T cross-section of a comparative example;
FIG. 6 is a diagram corresponding to FIG. 4 and illustrating an embodiment of the present disclosure;
FIG. 7 is a diagram corresponding to FIG. 4 and illustrating another embodiment of the present disclosure; and
FIG. 8 is a diagram corresponding to FIG. 4 and illustrating another embodiment of the present disclosure.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the present disclosure, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present invention are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### Multilayer Electronic Component

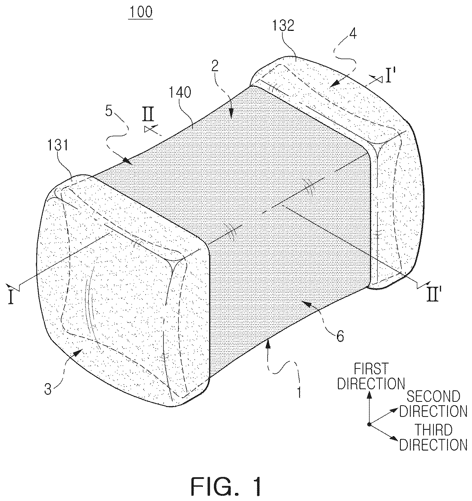

FIG. 1 is a perspective diagram illustrating a multilayer electronic component according to an embodiment.

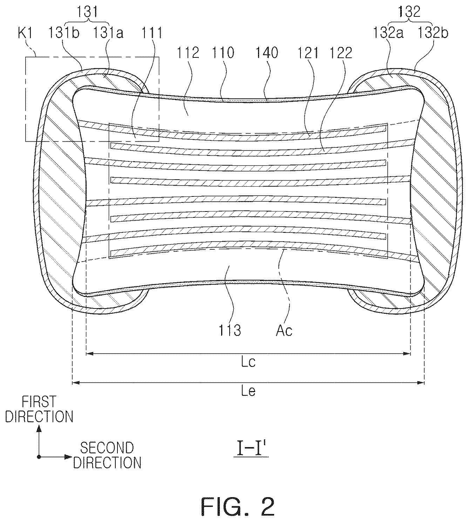

FIG. 2 is a cross-sectional diagram taken along line I-I' in FIG. 1.

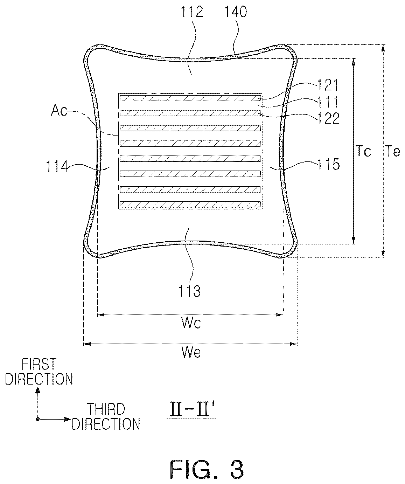

FIG. 3 is a cross-sectional diagram taken along line II-II' in FIG. 1.

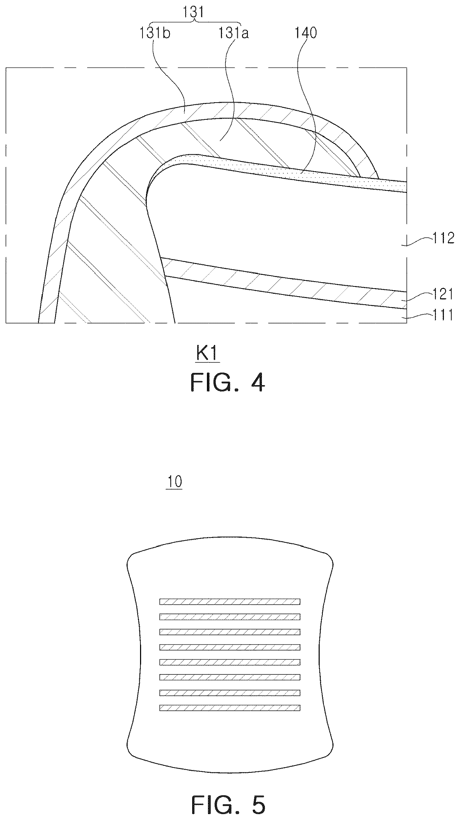

FIG. 4 is an enlarged diagram illustrating region K1 in FIG. 2.

Hereinafter, a multilayer electronic component 100 according to an embodiment will be described in greater detail with reference to FIGS. 1 to 4. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

The multilayer electronic component 100 may include a body 110 including a dielectric layer 111 and internal electrodes 121 and 122 alternately disposed in a first direction, and including first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces and opposing each other in a third direction, an insulating layer 140 disposed on the first, second, fifth and sixth surfaces; and external electrodes 131 and 132 disposed on the body.

In an embodiment, the insulating layer 140 may be BN.

In an embodiment, the insulating layer 140 may include one or more of Al₂O₃ and BN, and the first and second surfaces may have a concave shape, concave into the body.

In ceramic used as a material for the dielectric layer 111 , regardless of the type of material, permanent deformation such as viscous flow and firing deformation may occur during a high temperature firing process due to characteristics thereof, which may cause deformation of a chip, and stress along with volume change through deformation may occur. The stress may complexly include mechanical stress and thermal stress, and cracks may occur in the chip or the chip may be destroyed due to the stress.

Accordingly, in embodiments, by disposing ceramic materials having different reduction rates from that of the body on a surface of the body during sintering, stress during sintering may be relieved using deformation properties of ceramic materials, such that cracks may be prevented, and the shape of the body may be controlled.

Referring to FIG. 5, in a general body 10, which is a comparative example in which the insulating layer is not disposed on the body surface, a thickness of the body may increase due to reduction of the internal electrode pattern in a sintering process, and a cover portion may have a convex shape, which may cause a cover-convex phenomenon, and the margin portion may have a concave shape. When the cover portion has a convex shape as in the general body 10, when an electric field is applied to the MLCC chip, the chip may expand in the T direction (thickness direction) due to a reverse piezoelectric phenomenon, which may cause cracks.

According to an embodiment, differently from the general body, by disposing an insulating layer on the body surface, the cover-convex phenomenon of the body 110 may be prevented during the sintering process such that cracks may be suppressed.

Hereinafter, each component included in the multilayer electronic component 100 according to an embodiment will be described.

In the body 110, the dielectric layers 111 and the internal electrodes 121 and 122 may be alternately laminated.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first and second surfaces 1 and 2 and the third and fourth surfaces 3 and 4 and opposing each other in the third direction.

In an embodiment, the first and second surfaces 1 and 2 of the body 110 may have a concave shape, concave into the body. As the first and second surfaces 1 and 2 of the body 110 are concave into the body, crack due to expansion in the T direction (thickness direction) due to the reverse piezoelectric phenomenon may be prevented.

In an embodiment, in a cross-section cut in the first and third directions a center of the multilayer electronic component 100 in the second direction, when a minimum size in the first direction in a central portion of the multilayer electronic component 100 in the third direction is defined as Tc, and a maximum size in the first direction on an end portion in the third direction is defined as Te, Tc/Te may be less than 1.000 and more than 0.950.

In the cross-section taken in the first and third directions, the multilayer electronic component 100 may be divided into five regions in the third direction, a size in the first direction may be measured at five points at an equal distance in the first or fifth region (e.g., the end portion), and the maximum size may be defined as Te. The size in the first direction may be measured at five points at an equal distance in the third region (e.g., the central portion) and the minimum size may be defined as Tc. Other methods and/or tools appreciated by one of ordinary skill in the art, even if not described in the present disclosure, may also be used.

In an embodiment, the fifth and sixth surfaces 5 and 6 of the body 110 may have a concave shape, concave into the body.

Also, in a cross-section taken in the first and third directions in a center of the multilayer electronic component 100 in the second direction, when a minimum size in the third direction in a central portion of the multilayer electronic component taken in the first direction is defined as Wc, and a maximum size in the third direction on an end portion in the third direction is defined as We, Wc/We may be less than 1.000 and greater than 0.950.

In the cross-section in first and third direction, the multilayer electronic component 100 may be divided into five regions in the first direction, the size in the third direction may be measured at five points at an equal distance in the first or fifth region (e.g., the end portion), and the maximum size may be defined as We. The size in the third direction may be measured at five points at an equal distance in the third region (e.g., the central portion), and the minimum size may be defined as Wc. Other methods and/or tools appreciated by one of ordinary skill in the art, even if not described in the present disclosure, may also be used.

In an embodiment, the third and fourth surfaces 3 and 4 of the body 110 may have a concave shape, concave into the body.

Also, in a cross-section taken in the first and second directions in a center of the multilayer electronic component taken in the third direction, when a minimum size in the second direction in a central portion of the multilayer electronic component taken in the first direction is defined as Wc, and a maximum size in the second direction on an end portion in the first direction is defined as We, Wc/We is less than 1.000 and greater than 0.950.

In the first and second direction cross-section, the multilayer electronic component 100 may be divided into five regions in the first direction, the size in the second direction may be measured at five points at an equal distance in the first or fifth region (e.g., the end portion), and the maximum size may be defined as Le. The size in the second direction may be measured at five points at an equal distance in the third region (e.g., the central portion), and the minimum size may be defined as Lc. Other methods and/or tools appreciated by one of ordinary skill in the art, even if not described in the present disclosure, may also be used.

The plurality of dielectric layers 111 forming the body 110 may be in a fired state, and boundaries between adjacent dielectric layers 111 may be integrated with each other such that the boundaries therebetween may not be distinct without using a scanning electron microscope (SEM). The number of laminated dielectric layers is not limited any particular example, and may be determined considering a size of the multilayer electronic component. For example, a body may be formed by laminating more than 400 dielectric layers.

The dielectric layer 111 may be formed by preparing a ceramic slurry including ceramic powder, an organic solvent, an additive, and a binder, preparing a ceramic green sheet by coating the slurry on a carrier film and drying the slurry, and firing the ceramic green sheet. The ceramic powder is not limited to any particular example as long as sufficient electrostatic capacitance may be obtained therewith. An example of the ceramic powder may include BaTiO₃, (Ba₁₋ₓCaₓ)TiO₃ (0<x<1), Ba(Ti_{1-y}Ca_{y})O₃ (0<y<1), (Ba_{1-xC}aₓ)(Ti_{1-y}Zr_{y})O₃ (0<x<1, 0<y<1) and Ba(Ti_{1-y}Zr_{y})O₃ (0<y<1).

The dielectric layer 111 includes one or more of BaTiO₃, (Ba_{1-xC}aₓ)TiO₃ (0<x<1), Ba (Ti_{1-y}Ca_{y})O₃ (0<y<1), (Ba₁₋ₓCaₓ)(Ti_{1-y}Zr_{y})O₃ (0<x<1, 0<y<1) and Ba(Ti_{1-y}Zr_{y})O₃ (0<y<1). Accordingly, a difference in reduction rates with the insulating layer 140 may be easily controlled during firing, such that the shape of the body may be easily controlled.

In an embodiment, the dielectric layer 111 may include, as a main component, a material having a lower reduction rate than the insulating layer 140 during firing. When the dielectric layer 111 has a reduction rate higher than that of the insulating layer 140 during firing, the cover convex phenomenon may occur excessively during the sintering process, such that the first and second surfaces may easily have a convex shape. When the dielectric layer 111 has a reduction rate lower than the insulating layer 140 during firing, the cover convex phenomenon may be suppressed in the sintering process, and further, the first and second surfaces may easily have a concave shape. The reduction rate may be determined by measuring and comparing the dimensions (e.g., length, width, and thickness) of a layer of the material before and after firing. Other methods and/or tools appreciated by one of ordinary skill in the art, even if not described in the present disclosure, may also be used.

The average thickness of the dielectric layer 111 may not need to be limited to any particular example, an average thickness of at least one of the dielectric layers 111 may be 0.1 um or more and 10 um or less. Also, the average thickness of the dielectric layer 111 may be arbitrarily determined depending on desired characteristics or use. For example, in the case of a high voltage electronic component for a vehicle, the average thickness of at least one of the dielectric layers 111 may be 0.5 um or more, and the average thickness of at least one of the dielectric layers 111 may be less than 2.8 um to implement the capacitance of the multilayer electronic component.

The body 110 may include a capacitance forming portion Ac forming capacitance including the first internal electrode 121 and the second internal electrode 122 disposed in the body 110 and opposing each other with the dielectric layer 111 therebetween, and cover portions 112 and 113 formed in upper and lower portions of the capacitance forming portion Ac in the first direction.

Also, the capacitance forming portion Ac may contribute to forming the capacitance of the capacitor, and may be formed by repeatedly laminating the plurality of first and second internal electrodes 121 and 122 with the dielectric layer 111 interposed therebetween.

The cover portions 112 and 113 may include an upper cover portion 112 disposed on the capacitance forming portion Ac in the first direction and a lower cover portion 113 disposed below the capacitance forming portion Ac in the first direction.

The upper cover portion 112 and lower cover portion 113 may be formed by laminating a single dielectric layer or two or more dielectric layers on the upper and lower surfaces of the capacitance forming portion Ac in the thickness direction, respectively, and may basically prevent damages to the internal electrode due to physical or chemical stress.

The upper cover portion 112 and the lower cover portion 113 may not include an internal electrode and may include the same material as that of the dielectric layer 111.

That is, the upper cover portion 112 and the lower cover portion 113 may include a ceramic material, for example, barium titanate (BaTiO₃) ceramic material.

Thicknesses of the cover portions 112 and 113 may not be limited to any particular example. For example, the average thickness of the cover portions 112 and 113 may be 300 um or less, or 1-20% of the size of the body in the first direction. Here, the average thickness of the cover portions 112 and 113 may indicate the average thickness of the upper cover portion 112 and the lower cover portion 113, respectively. The average thickness of the cover portions 112 and 113 may refer to the average size of the cover portions 112 and 113 in the first direction, and may be an average value of the first direction size measured at five points at an equal distance in the cross-section of the body 110 in the first and second directions.

Also, margin portions 114 and 115 may be disposed on a side surface of the capacitance forming portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on end surfaces of the ceramic body 110 in the width direction.

As illustrated in FIG. 3, the margin portions 114 and 115 may refer to a region between both ends of the first and second internal electrodes 121 and 122 and a boundary surface of the body 110 in a cross-section of the body 110 in the width-thickness (W-T) direction.

The margin portions 114 and 115 may basically prevent damages to the internal electrode due to physical or chemical stress.

The margin portions 114 and 115 may be formed by forming an internal electrode by applying a conductive paste on the ceramic green sheet other than the region in which the margin portion is to be formed.

Also, to suppress a step difference caused by the internal electrodes 121 and 122, after laminating, the internal electrode may be cut to be exposed to the fifth and sixth surfaces 5 and 6 of the body, and a single dielectric layer or two or more dielectric layers may be laminated on both side surfaces of the capacitance forming portion Ac in the third direction (width direction), thereby forming the margin portion 114 and 115.

Widths of the margin portions 114 and 115 may not need to be limited to any particular example. For example, the average width of margin portions 114 and 115 may be less than 400 um or 1-15% of the size of the body in the third direction.

The average width of margin portions 114 and 115 may refer to the average size in the third direction of the region in which the internal electrode is spaced apart from the fifth surface, the average size in the third direction of the region in which the internal electrode is spaced apart from the sixth surface, and the average value of the size of the margin portions 114 and 115 in the third direction, measured at five points at an equal distance on the side surface of the capacitance forming portion Ac.

The internal electrodes 121 and 122 may include first and second internal electrodes 121 and 122. The first and second internal electrodes 121 and 122 may be disposed alternately to oppose each other with the dielectric layer 111 included in the body 110 therebetween, and may be exposed to the third and fourth surfaces 3 and 4 of the body 110, respectively.

The first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body and may be connected to the first internal electrode 121, and the second external electrode 132 may be disposed on the fourth surface 4 of the body and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. Accordingly, the first internal electrode 121 may be spaced apart from the fourth surface 4 at a predetermined distance, and the second internal electrode 122 may be spaced apart from the third surface 3 by a predetermined distance. Also, the first and second internal electrodes 121 and 122 may be spaced apart from the fifth and sixth surfaces of the body 110.

A conductive metal included in the internal electrodes 121 and 122 may be one or more of Ni, Cu, Pd, Ag, Au, Pt, In, Sn, Al, Ti and alloys thereof, but an embodiment thereof is not limited thereto.

A method of forming the internal electrodes 121 and 122 is not limited to any particular example. For example, the internal electrodes 121 and 122 may be formed by applying a conductive paste for internal electrodes including a conductive metal on a ceramic green sheet and firing the sheet. As the method of applying the conductive paste for internal electrodes, a screen-printing method or a gravure printing method may be used, but an embodiment thereof is not limited thereto.

As another example, the internal electrodes 121 and 122 may be formed using a sputtering method, a vacuum deposition method, and/or a chemical vapor deposition method.

The average thickness of the internal electrodes 121 and 122 may not need to be limited to any particular example, and may be, for example, 3.0 um or less. Also, an average thickness of internal electrodes 121 and 122 may be arbitrarily determined depending on desired characteristics or use. For example, in the case of a high voltage electronic component for a vehicle, the average thickness of at least one of the internal electrodes 121 and 122 may be 0.1 um or more, and to implement the capacitance of the multilayer electronic component, the average thickness of at least one of the internal electrodes 121 and 122 may be less than 1.0 µm.

The average thickness of the dielectric layer 111 and the average thickness of the internal electrodes 121 and 122 may indicate the sizes of the dielectric layer 111 and the internal electrodes 121 and 122 in the first direction, respectively. The average thickness of the dielectric layer 111 and the average thickness of the internal electrodes 121 and 122 may be measured by scanning the cross-sections of the body 110 in the first and second directions using a scanning electron microscope (SEM) at 10,000 magnification. More specifically, the average thickness of the dielectric layer 111 may be measured by measuring the thickness at multiple points of the dielectric layer 111, for example, 30 points at equal distances in the second direction. Also, the average thickness of the internal electrodes 121 and 122 may be measured by measuring the thickness at multiple points of one of the internal electrode 121 and 122, for example, 30 points at an equal distance in the second direction. The 30 points at equal distance may be designated in the capacitance forming portion. Meanwhile, the measuring the average value may be performed on 10 dielectric layers 111 and internal electrodes 121 and 122, and the average thickness of the dielectric layer 111 and the average thickness of the internal electrodes 121 and 122 may be further generalized.

The insulating layer 140 may be disposed on the first, second, fifth and sixth surfaces of the body. Accordingly, moisture resistance reliability may be improved by covering fine pores and cracks of the body 110, and the shape of the body 110 may be easily controlled by effectively controlling stress generated by heat.

In an embodiment, the insulating layer 140 may include a material having a reduction rate higher than that of the dielectric layer 111 during firing. Accordingly, by suppressing the cover convex phenomenon of the body 110 during a sintering process, cracks may be suppressed.

In an embodiment, the insulating layer 140 may include one or more of Al₂O₃ (alumina) and BN (boron nitride) . Accordingly, the insulating layer 140 may have excellent adhesion with the body 110 and may suppress the cover convex phenomenon of the body 110 during a sintering process. Further, the first and second surfaces of the body 110 may easily have a concave shape, concave into the body.

In an embodiment, the insulating layer 140 may include BN. As BN has a reduction rate higher than that of Al₂O₃ during a sintering process, the cover convex phenomenon may be easily suppressed.

The method of forming the insulating layer 140 is not limited to any particular example. For example, a coating solution may be prepared by mixing powder with a particle size of 3um with an aqueous binder, a plasticization process may be performed, the coating solution may be applied on the body 110 using a brush before a sintering process, and the insulating layer 140 may be formed through the sintering process. In addition to using a brush, the coating solution may be applied using a physical vapor deposition method such as electron beam evaporation or sputtering on the body. Also, it may be easier to control the shape of the body by applying the coating solution after the plasticization process and before the sintering process, but an embodiment thereof is not limited thereto, and the coating solution may be applied after applying the paste to form an external electrode or before forming the plating layer, or may be applied before forming the conductive resin layer.

In this case, the BN powder content in the coating solution may be 9 wt% or less, and the content of Al₂O₃ powder may be 18 wt% or less.

Referring to FIG. 4, the insulating layer 140 may not be disposed on the third and fourth surfaces of the body.

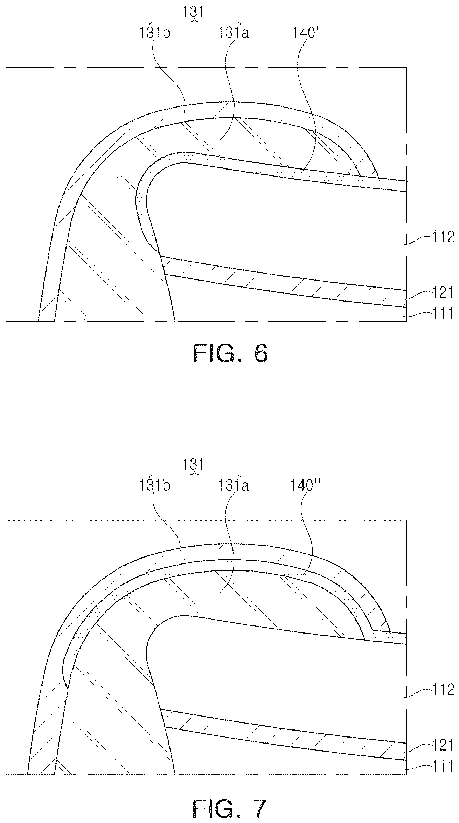

However, an embodiment thereof is not limited thereto, and referring to FIG. 6, in an embodiment, the insulating layer 140' may extend to at least a portion of the third and fourth surfaces. In this case, the insulating layer 140' may be disposed to not cover the internal electrodes 121 and 122 on the third surface and fourth surface. Accordingly, moisture resistance reliability may be improved and the shape of the body 110 may be easily controlled without deteriorating electrical connection between the internal electrodes 121 and 122 and the external electrodes 131 and 132.

In an embodiment, the body 110 may include a material included in the insulating layer 140 in a region adjacent to the insulating layer 140. This is because the material contained in the insulating layer 140 may diffuse into the body 110 during the sintering process.

Meanwhile, the average thickness of the insulating layer 140 is not limited to any particular example and may be adjusted appropriately to obtain the desired shape of the body. For example, the average thickness of the insulating layer 140 may be 10-300 um. The average thickness of the insulating layer 140 may be measured by scanning the cross-sections in first and third directions in a center of the body 110 in the second direction using a scanning electron microscope (SEM) at 10,000 magnification, and the insulating layer 140 be distinct by having a difference in contract from the body 110. The average value of the insulating layer 140 may be measured by measuring the thickness at 30 points at an equal distance in a central portion of the second surface in the third direction.

The external electrodes 131 and 132 may be disposed on the body 110.

Meanwhile, in the embodiment, the multilayer electronic component 100 may include two external electrodes 131 and 132, but the number of the external electrodes 131 and 132 and the shape thereof may be varied by the shape of the internal electrodes 121 and 122 and other use. For example, the external electrode may include a first external electrode disposed on the third surface, a second external electrode disposed on the fourth surface, and a third external electrode disposed on at least one of the first, second, fifth and sixth surfaces.

In an embodiment, the external electrodes 131 and 132 may include first and second external electrodes 131 and 132 disposed on the third and fourth surfaces 3 and 4 of body 110, respectively, and connected to the first and second internal electrodes 121 and 122, respectively. Also, the first and second external electrodes may be disposed by extending to a portion of the first and second surfaces.

Also, the external electrodes 131 and 132 may be disposed to cover the end surfaces of the side margin portions (first and second margin portions 114 and 115) in the second direction.

In an embodiment, the external electrodes 131 and 132 may be disposed on the third and fourth surfaces and may be disposed on at least a portion of the insulating layer 140.

Meanwhile, the external electrodes 131 and 132 may be formed using a material having electrical conductivity, such as metal, and the specific material may be determined considering electrical characteristics, and structural stability, and may have multilayer structure.

For example, the external electrodes 131 and 132 may include electrode layers 131a and 132a disposed on the body 110 and plating layers 131b and 132b formed on the electrode layers 131a and 132a.

The plating layers 131b and 132b may improve mounting characteristics. The types of the plating layers 131b and 132b are not limited to any particular example, and the plating layers 131b and 132b may contain one or more of Ni, Sn, Pd and alloys thereof, and may include a plurality of layers.

As a specific example of the plating layers 131b and 132b, the plating layers 131b and 132b may be a Ni plating layer or a Sn plating layer, and the Ni plating layer and the Sn plating layer may be formed in order on the electrode layers 131a and 132a, or the Sn plating layer, the Ni plating layer and the Sn plating layer may be formed in order. Also, the plating layers 131b and 132b may include a plurality of Ni plating layers and/or a plurality of Sn plating layers.

Referring to FIG. 7, in an embodiment, the first external electrode 131 may include an electrode layer 131a connected to the internal electrode 121 and a plating layer 131b disposed on the electrode layer, and the Insulating layer 140" may extend to a region between the electrode layer 131a and the plating layer 131b. In FIG. 7, only the first external electrode 131 is illustrated, but the second external electrode 132 may also have a corresponding component.

As a specific example of the electrode layers 131a and 132a, the electrode layers 131a and 132a may be firing electrodes including conductive metal and glass, or may be resin-based electrodes including conductive metal and resin. Also, the electrode layer 131a may be a multilayer structure including a base electrode layer in contact with the internal electrode and including glass, and a conductive resin layer disposed on the base electrode layer and including resin.

Also, the electrode layers 131a and 132a may be formed by transferring a sheet including conductive metal to the body, or may be formed by transferring a sheet including conductive metal to the firing electrode.

As the conductive metal included in electrode layers 131a and 132a, a material having excellent electrical conductivity may be used and are not limited to any particular example. For example, the conductive metal may be one or more of nickel (Ni), copper (Cu) and alloys thereof.

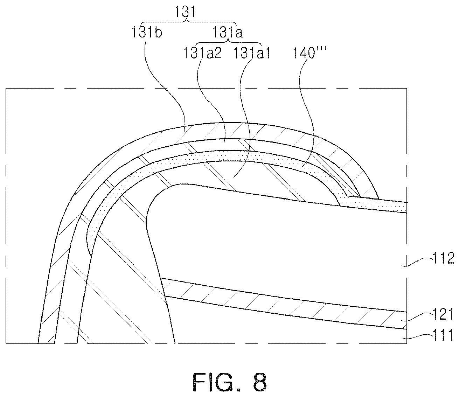

Referring to FIG. 8, in an embodiment, the first external electrode 131 may include a base electrode layer 131a1 in contact with the first internal electrode 121 and including glass and a conductive resin layer 131a2 disposed on the base electrode layer and including resin, and the insulating layer 140'" may extend to a region between the base electrode layer 131a1 and the conductive resin layer 131a2. Also, the second external electrode 132 may also have a component corresponding to the first external electrode 131.

### (Embodiment)

A ceramic green sheet having the internal electrode pattern printed thereon was laminated and compressed, and was cut into unit chip sizes. Thereafter, a plasticization process may be performed, and in the comparative example, an insulating layer was not disposed on the body surface and a sintering process was performed, thereby manufacturing a sample chip. In example 1, after the plasticization process, a coating solution containing 9 wt% of BN was applied to the body surface and a sintering process was performed, thereby manufacturing a sample chip, and in example 2, after the plasticization process, a coating solution containing 18wt% of Al₂O₃ was applied to the body surface and a sintering process was performed, thereby manufacturing a sample chip. In the comparative example, five sample chips for each of example 1 and example 2 were manufactured, and a thickness, a width, and a length thereof were measured. In Table 1, in a cross-section taken in the first and third directions of the sample chip cut out in a center in the second direction, a minimum size in the first direction in a central portion of the sample chip in the third direction was defined as Tc, and the maximum size on an end taken in the third direction was defined as Te, and Tc and Te were listed in Table 1, and the minimum size in the third direction in a central portion of the sample chip in the first direction was defined as Wc, and the maximum size in the third direction on an end taken in the third direction was defined as We, and Wc and We were listed in Table 2 below.

Also, in a cross-section in which the sample chip was cut in the first and second directions in the center in the third direction, the minimum size in the second direction in the central portion of the sample chip in the first direction was defined as Tc, and the maximum size in the second direction on the end taken in the first direction was defined as Te, and Tc and Te were listed in Table 3 below.

**[Table 1]**

| Test No. | Comparative example | | | Example 1 | | | Example 2 | | |
|---|---|---|---|---|---|---|---|---|---|
| | Tc (mm) | Te(mm) | Tc/Te | Tc (mm) | Te(mm) | Tc/Te | Tc(mm) | Te(mm) | Tc/Te |
| 1 | 2.456 | 2.438 | 1.007 | 2.454 | 2.505 | 0.980 | 2.428 | 2.434 | 0.998 |
| 2 | 2.455 | 2.425 | 1.012 | 2.467 | 2.485 | 0.993 | 2.422 | 2.430 | 0.997 |
| 3 | 2.433 | 2.432 | 1.000 | 2.467 | 2.539 | 0.972 | 2.419 | 2.430 | 0.995 |
| 4 | 2.425 | 2.416 | 1.004 | 2.472 | 2.528 | 0.978 | 2.431 | 2.441 | 0.996 |
| 5 | 2.433 | 2.418 | 1.006 | 2.454 | 2.481 | 0.989 | 2.432 | 2.427 | 1.002 |

Referring to Table 1, in the comparative example, none of the five sample chips had a Tc/Te of less than 1.000, and four samples had a Tc/Te of more than 1.000, such that the first and second surfaces of the body were convex.

In example 1 in which an insulating layer including BN was disposed, Tc/Te of five sample chips was 0.972-0.989, indicating that the first and second surfaces of the body were concave.

In example 2 in which an insulating layer including Al₂O₃ was disposed, among the five sample chips, four sample chips were in the range of 0.995-0.998, such that the first and second surfaces of the body were concave. Also, in test number 5 of example 2, the convex shape of the first and second surfaces was suppressed as compared to test number 2 of the comparative example.

**[Table 2]**

| Test No. | Comparative example | | | Example 1 | | | Example 2 | | |
|---|---|---|---|---|---|---|---|---|---|
| | Wc (mm) | We (mm) | Wc/We | Wc (mm) | We (mm) | Wc/We | Wc (mm) | We (mm) | Wc/We |
| 1 | 2.563 | 2.564 | 1.000 | 2.440 | 2.451 | 0.996 | 2.552 | 2.545 | 1.003 |
| 2 | 2.578 | 2.576 | 1.001 | 2.428 | 2.465 | 0.985 | 2.557 | 2.563 | 0.998 |
| 3 | 2.582 | 2.595 | 0.995 | 2.410 | 2.462 | 0.979 | 2.558 | 2.567 | 0.996 |
| 4 | 2.586 | 2.572 | 1.005 | 2.446 | 2.492 | 0.982 | 2.562 | 2.562 | 1.000 |
| 5 | 2.578 | 2.586 | 0.997 | 2.426 | 2.506 | 0.968 | 2.572 | 2.582 | 0.996 |

Referring to Table 2, in comparative example, two sample chips had Wc/We of less than 1.000, in example 1, five sample chips had Wc/We of less than 1.000, and in example 2, three sample chips had Wc/We of less than 1.000. Accordingly, when disposing an insulating layer including at least one of Al₂O₃ and BN, the shape in the width direction of the body may also be controlled.

**[Table 3]**

| Test No. | Comparative example | | | Example 1 | | | Example 2 | | |
|---|---|---|---|---|---|---|---|---|---|
| | Lc (mm) | Le (mm) | Lc/Le | Lc (mm) | Le (mm) | Lc/Le | Lc (mm) | Le (mm) | Lc/Le |
| 1 | 3.281 | 3.287 | 0.998 | 3.272 | 3.351 | 0.976 | 3.281 | 3.324 | 0.987 |
| 2 | 3.287 | 3.296 | 0.997 | 3.263 | 3.348 | 0.975 | 3.277 | 3.292 | 0.995 |
| 3 | 3.286 | 3.293 | 0.998 | 3.263 | 3.395 | 0.961 | 3.282 | 3.297 | 0.995 |
| 4 | 3.276 | 3.282 | 0.998 | 3.262 | 3.361 | 0.971 | 3.281 | 3.291 | 0.997 |
| 5 | 3.276 | 3.282 | 0.998 | 3.265 | 3.391 | 0.963 | 3.289 | 3.298 | 0.997 |

Referring to Table 3, the comparative example, the example 1 and the example 2 had Lc/Le of less than 1.000, and had a concave shape. However, as compared to the comparative example, examples 1 and 2 had lower Lc/Le values, such that, when disposing an insulating layer including at least one of Al₂O₃ and BN, the shape of the body in the length direction may also be controlled.

According to the aforementioned embodiments, by controlling the shape of the body by disposing an insulating layer on at least a portion of a surface of the body, cracks may be suppressed in the multilayer electronic component.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The above suggested embodiments may be implemented do not exclude the possibilities of combination with features of other embodiments. For example, even though the features described in an embodiment are not described in the other embodiment, the description may be understood as relevant to the other embodiment unless otherwise indicated.

An expression used in the singular encompasses the expression of the plural, unless it has a clearly different meaning in the context.

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and an internal electrode alternately disposed in a first direction, and including first and second surfaces opposing each other in the first direction, third and fourth surfaces opposing each other in a second direction and connected to the first and second surfaces , and fifth and sixth surfaces opposing each other in a third direction and connected to the first to fourth surfaces ;
an insulating layer disposed on the first, second, fifth, and sixth surfaces and including at least one of Al₂O₃ and BN;
an external electrode disposed on the body,
wherein each of the first and second surfaces is concave into the body.

2. The multilayer electronic component of claim 1, wherein each of the fifth and sixth surfaces is concave into the body.

3. The multilayer electronic component of claim 1, wherein each of the third and fourth surfaces is concave into the body.

4. The multilayer electronic component of claim 1, wherein the insulating layer extends to at least a portion of the third and fourth surfaces.

5. The multilayer electronic component of claim 4, wherein the insulating layer is disposed to not cover the internal electrode on the third and the fourth surfaces.

6. The multilayer electronic component of claim 1, wherein the insulating layer includes BN.

7. The multilayer electronic component of claim 1, wherein the dielectric layer includes one or more of BaTiO₃, (Ba_{1-xC}aₓ)TiO₃ (0<x<1), Ba(Ti_{1-y}Ca_{y})O₃ (0<y<1), (Ba_{1-xC}aₓ)(Ti_{1-y}Zr_{y})O₃ (0<x<1, 0<y<1), and Ba(Ti_{1-y}Zr_{y})O₃ (0<y<1).

8. The multilayer electronic component of claim 1, wherein the dielectric layer includes a main component that includes a material having a reduction rate during firing lower than that of the insulating layer .

9. The multilayer electronic component of claim 1, wherein the external electrode is disposed on the third and fourth surface and is disposed on at least a portion of the insulating layer.

10. The multilayer electronic component of claim 1, wherein the external electrode includes an electrode layer connected to the internal electrode and a plating layer disposed on the electrode layer, and the insulating layer extends to a region between the electrode layer and the plating layer.

11. The multilayer electronic component of claim 10, wherein the electrode layer includes a base electrode layer in contact with the internal electrode and including glass, and a conductive resin layer including resin disposed on the base electrode layer.

12. The multilayer electronic component of claim 1, wherein the external electrode includes:
a base electrode layer in contact with the internal electrode and including glass, and
a conductive resin layer disposed on the base electrode layer and including resin, and
the insulating layer extends to a region between the base electrode layer and the conductive resin layer.

13. The multilayer electronic component of claim 1, wherein, in a cross-section taken in the first and third directions in a center of the multilayer electronic component taken in the second direction, when a minimum size in the first direction is defined as Tc, and a maximum size in the first direction is defined as Te, Tc/Te is less than 1.000 and greater than 0.950.

14. The multilayer electronic component of claim 1, wherein, in a cross-section taken in the first and third directions in a center of the multilayer electronic component taken in the second direction, when a minimum size in the third direction is defined as Wc, and a maximum size in the third direction is defined as We, Wc/We is less than 1.000 and greater than 0.950.

15. The multilayer electronic component of claim 1, wherein, in a cross-section taken in the first and second directions in a center of the multilayer electronic component taken in the third direction, when a minimum size in the second direction is defined as Lc, and a maximum size in the second direction is defined as Le, Lc/Le is less than 1.000 and greater than 0.950.
